# EUROPÄISCHE PATENTSCHRIFT

(11) **EP 2 397 705 B1**
(45) Veröffentlichungstag und Bekanntmachung des Hinweises auf die Patenterteilung: **14.10.2015**
(21) Anmeldenummer: 11166617.8
(22) Anmeldetag: 18.05.2011
(51) Int. Cl.: F16B 13/12, F16B 25/00

(54) **Verankerungssystem zum beabstandeten spannungsfreien Montieren eines Anbauteils an einen Verankerungsgrund**
Anchoring system for distanced tension-free mounting of an element to an anchoring base
Système d'ancrage pour le montage sans tension distant d'un élément de montage sur un support d'ancrage

(30) Priorität: 18.06.2010 DE 102010030281
(43) Veröffentlichungstag der Anmeldung: 21.12.2011
(73) Patentinhaber: Adolf Würth GmbH & Co. KG, 74653 Künzelsau (DE); Würth International AG, 7000 Chur (CH)
(72) Erfinder: Küenzlen, Jürgen, 71570 Oppenweiler (DE); Wieland, Achim, 74211 Leingarten (DE); Wiest, Bernhard, 78730 Lauterbach (DE); Joenson, Sven, 01257 Dresden (DE)
(74) Vertreter: Dilg, Andreas

(56) Entgegenhaltungen:
- DE-A1- 3 716 808
- DE-A1- 10 056 506
- DE-A1- 19 705 202
- DE-A1- 19 958 478
- DE-B- 1 137 197

## Beschreibung

Die Erfindung betrifft ein Montagekit zum beabstandeten spannungsfreien Montieren eines Anbauteils an einen Verankerungsgrund, ein Verfahren zum beabstandeten Montieren eines Anbauteils an einen Verankerungsgrund und eine Verwendung.

Während für die Montagearbeiten, bei denen das Anbauteil direkten Kontakt mit dem Verankerungsgrund hat, eine große Anzahl von Systemen und Produkten zur Verfügung steht, bereitet die so genannte Abstandsmontage immer wieder Probleme. Teilweise auch im Neubau, gerade aber in der Sanierung, tritt oft der Fall auf, dass der Verankerungsgrund mit einer zusätzlichen Dämmung oder dergleichen versehen werden soll. Bei Montage eines Anbauteils an einen Verankerungsgrund, wobei zwischen diesen die Dämmschicht angeordnet ist, soll die Dämmschicht mittels eines Verankerungselementes druckfest überbrückt werden, um diese nicht zu beschädigen und die Einleitung von Druckkräften in den Verankerungsgrund zu ermöglichen. Dabei wird das Anbauteil entsprechend einer Setz- und Montageanweisung des gewählten Verankerungselementes montiert.

DE 1137197 offenbart ein System zur Befestigung von Holzbauteilen. Um bei einer derartigen Befestigungsart die Anordnung der Schraube bei gleichzeitiger Vermeidung einer Schlüsselschraube zu verdecken, wird in DE 1137197 vorgeschlagen, als Verbindungselement zwischen Dübel und Rahmen eine mit Gewindeabschnitten verschiedenen Durchmessers versehene Holzschraube zu verwenden. Die Anordnung der Holzschraube ist so getroffen, dass der vom Dübel aufgenommene Gewindeabschnitt den jeweils kleineren Gewindedurchmesser hat.

DE 19705202 offenbart ein Verfahren zum Befestigen von Holzkonstruktionsteilen im Abstand vor einer Betonwand oder Mauer, mit folgenden Verfahrensschritten:
a) Vorbohren des Holzkonstruktionsteils und des Betons oder des Mauerwerks mit einem Bohrungsdurchmesser, der etwa dem Schaftdurchmesser der nachfolgend verwendeten Justierschraube entspricht, b) Eindrehen einer mit Kopf ausgestatteten Justierschraube in die vorgebohrten Löcher von Holzkonstruktionsteil und Beton oder Mauerwerk, wobei die Justierschraube mit einem einschraubenden Gewindeschaft im spitzenzugewandten Bereich und mit einem aus mehreren, beabstandeten Rückhalte-Vorsprüngen versehenen Bettungsbereich unterhalb des Kopfes versehen ist, c) Einbohren des Gewindeschaftes in den Beton bzw. das Mauerwerk ohne Verwendung eines Dübels, bis zur Auflage der Innenseite des Kopfes an die Außenseite des Holzkonstruktionsteils, wobei sich die Rückhalte-Vorsprünge schließlich im Holzkonstruktionsteil verankern, d) Herausdrehen des Gewindeschaftes aus dem Beton oder dem Mauerwerk bei gleichzeitiger Unbeweglichkeit des Bettungsbereiches im Holzkonstruktionsteil in Achsenrichtung bis zum gewünschten Abstand von Holzkonstruktionsteil und Wand bzw. Mauer.

DE 10056506 offenbart eine Vorrichtung zum Befestigen eines ersten Gegenstandes mit Abstand zu einem zweiten Gegenstand, umfassend einen in dem zweiten Gegenstand verankerbaren Schaft und Mittel zum Halten des ersten Gegenstandes mit Abstand zum zweiten Gegenstand, wobei die Vorrichtung nach Art einer Schraube ausgebildet ist und einen Schraubenschaft mit zwei voneinander beabstandeten Gewindeabschnitten aufweist, wobei ein erster Gewindeabschnitt im Bereich der Spitze des Schraubenschaftes zum Verankern der Vorrichtung in dem zweiten Gegenstand beginnend und ein zweiter Gewindeabschnitt zum Festsetzen des Schraubenschaftes in dem ersten Gegenstand angeordnet sind und wobei der zwischen dem ersten und dem zweiten Gewindeabschnitt befindliche Schaftabschnitt eine Länge aufweist, die größer ist als die von der Vorrichtung zu durchgreifende Materialstärke des ersten Gegenstandes und der Außendurchmesser dieses Schaftabschnittes kleiner ist als der Außendurchmesser des ersten und des zweiten Gewindeabschnittes.

DE 19958478 offenbart eine Vorrichtung zur Verbindung wenigstens zweier Bauteile, wobei ein erstes Verbindungselement in eine Ausnehmung wenigstens eines Bauteiles einsetzbar ist und durch ein zweites Verbindungselement ein Mantel des ersten Verbindungselementes gegen eine Wandung der Ausnehmung pressbar ist, wobei das erste Verbindungselement als strangförmiges Gut endlicher Länge vorliegt und variabel in Abhängigkeit einer Tiefe der Ausnehmung und/oder einer Länge des zweiten Verbindungselementes konfektionierbar ist.

Die Firma Würth bietet zum Beispiel zur Montage eines Fensterrahmens an einer Wand die Abstandsmontageschraube Amo III an. Diese stellt eine in der Praxis einfach handhabbare Abstandsmontageschraube dar, mit der es ermöglicht ist, Fenster präzise und sicher spannungsfrei zu befestigen. Bei der Abstandsmontageschraube Amo III handelt es sich um eine selbst hinterschneidende Schraube, die ohne einen Dübel auskommt und alle angreifenden Lasten mittels Formschluss in den Untergrund einleitet.

Die Firma Würth bietet ferner zur Abstandsmontage das dübelbasierte Befestigungssystem F-Anker an. Dieses stellt einen spannungsfreien Abstandsmontage-Anker für die Verbindung zweier räumlich getrennter Elemente nach vorjustiertem Abstand bereit. Bei dem F-Anker schneidet das Kopfgewinde in den Fensterrahmen bzw. die Holzleiste ein und fixiert diese zug- und druckfest auf Abstand zum Verankerungsgrund. Ein Befestigungssystem auf Basis eines F-Ankers erfordert stets den Einsatz eines Dübels. Für die Befestigung in einem Untergrund mit Hohlkammern können herkömmliche Dübel allerdings zu kurz sein.

Es ist eine Aufgabe der vorliegenden Erfindung, in benutzerfreundlicher Weise ein Anbauteil an einen beliebigen Verankerungsgrund stabil und beabstandet zu befestigen.

Diese Aufgabe wird durch ein Montagekit zum beabstandeten Montieren eines Anbauteils an einen Verankerungsgrund, durch ein Verfahren zum beabstandeten Montieren eines Anbauteils an einen Verankerungsgrund und durch eine Verwendung mit den Merkmalen gemäß den unabhängigen Patentansprüchen gelöst.

Gemäß einem Ausführungsbeispiel der vorliegenden Erfindung ist ein Montagekit zum beabstandeten Montieren eines Anbauteils an einen Verankerungsgrund geschaffen. Das Montagekit weist eine gehärtete Schraube mit einem Gewindeteil und einen Dübel auf. Die Schraube ist ausgebildet, bei Eindrehen in eine Bohrung in einer Betonwand selbstschneidend ein Gewinde zu bilden. Die Schraube ist eingerichtet, durch das Anbauteil hindurch in eine Bohrung in einen als Vollkörper ausgestalteten Verankerungsgrund dübelfrei eingedreht zu werden, wobei sich diese ein Gewinde in den Vollkörper schneidet. Die Schraube ist ferner eingerichtet, durch das Anbauteil hindurch in den Dübel in einer Bohrung in einem als Hohlkörper ausgestalteten Verankerungsgrund eingedreht zu werden.

Gemäß einem anderen Ausführungsbeispiel der vorliegenden Erfindung ist ein Verfahren zum beabstandeten spannungsfreien Montieren eines Anbauteils an einen Verankerungsgrund bereitgestellt. Bei dem Verfahren werden eine gehärtete Schraube mit einem Gewindeteil sowie ein Dübel bereitgestellt. Es wird ermittelt, ob der Verankerungsgrund ein Vollkörper oder ein Hohlkörper ist. Falls ermittelt worden ist, dass der Verankerungsgrund ein Vollkörper ist, wird die Schraube durch das Anbauteil hindurch in eine Bohrung in dem als Vollkörper ausgestalteten Verankerungsgrund dübelfrei eingedreht, wobei sich diese ein Gewinde in den Vollkörper schneidet. Falls ermittelt worden ist, dass der Verankerungsgrund ein Hohlkörper ist, wird die Schraube durch das Anbauteil hindurch in den Dübel in einer Bohrung in dem als Hohlkörper ausgestalteten Verankerungsgrund eingedreht.

Gemäß noch einem anderen Ausführungsbeispiel der vorliegenden Erfindung werden ein abgelängter Dübel und eine gehärtete Schraube mit einem Gewindeteil zum beabstandeten Montieren eines Anbauteils an einen als Hohlkörper ausgestalteten Verankerungsgrund verwendet.

Im Rahmen dieser Anmeldung kann unter dem Begriff "Schraube, die bei Eindrehen in eine Bohrung in einer Betonwand selbstschneidend ein Gewinde bildet" insbesondere eine Schraube verstanden werden, die zu dem Zweck ausreichend robust ausgestaltet ist, in einer Betonwand (insbesondere in einer Vollbetonwand) ein Gewinde schneiden zu können, wenn die Schraube in ein vorgefertigtes Sackloch in der Betonwand eingeschraubt wird. Zum Beispiel kann die Schraube hierfür aus gehärtetem Material, insbesondere aus gehärtetem Stahl, gefertigt sein. Insbesondere kann die Schraube als selbstschneidende Betonschraube (also als eine selbst hinterschneidende Schraube für Betonanwendungen) ausgebildet sein.

Im Rahmen dieser Anmeldung kann unter dem Begriff "Anbauteil" insbesondere ein Bauteil verstanden werden, das an einen Verankerungsgrund beabstandet montierbar ist und somit an den Verankerungsgrund unter Beibehaltung eines vorbestimmten Abstands angebaut werden kann.

Im Rahmen dieser Anmeldung kann unter dem Begriff "Verankerungsgrund" insbesondere ein zum Verankern der Schraube geeigneter Untergrund verstanden werden. Ein solcher Verankerungsgrund kann insbesondere eine Wand, weiter insbesondere eine vertikale Wand, sein. Materialien für einen solchen Verankerungsgrund sind insbesondere Beton- und Mauerwerksbaustoffe oder auch Metall, Holzbaustoffe oder Kunststoffbauteile. Ferner kann ein solcher Verankerungsgrund auch ein beliebiger Kompositwerkstoff aus mehreren unterschiedlichen Materialkomponenten sein.

Im Rahmen dieser Anmeldung kann unter dem Begriff "Vollkörper" insbesondere ein Verankerungsgrund verstanden werden, der von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Verankerungsgrunds sein.

Im Rahmen dieser Anmeldung kann unter dem Begriff "Hohlkörper" insbesondere ein Verankerungsgrund verstanden werden, der im Inneren (insbesondere in einem Eindringbereich der Schraube in den Verankerungsgrund) Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Porenbeton, Hochlochziegelsteine oder haufwerksporiger Leichtbeton.

Maßgeblich für den Begriff "Hohlkammer" ist daher, dass im Bereich einer solchen im Sinne dieser Beschreibung eine Schraube keinen oder keinen nennenswerten Beitrag zur Befestigung der Schraube in dem Verankerungsgrund hat. Insbesondere können Hohlkammern in diesem Sinne materialfreie Bereiche im Inneren des Verankerungsgrunds sein, die zumindest in einer Dimension eine Ausdehnung von mindestens 1 mm, insbesondere von mindestens 5 mm haben. Ferner können Hohlkammern in diesem Sinne insbesondere materialfreie Bereich im Inneren des Verankerungsgrunds sein, die ein Volumen von mindestens 10⁻⁸ m³, insbesondere von mindestens 10⁻⁶ m³ haben. Aber auch Poren großer Dichte können den Halt der Schraube in dem Verankerungsgrund signifikant herabsetzen, so dass ein hochporöser Körper ebenfalls als Hohlkörper bezeichnet werden kann.

Im Rahmen dieser Anmeldung kann unter dem Begriff "abgelängter Dübel" insbesondere ein Dübel verstanden werden, der von einem Dübelhalbzeug oder einem Endlosdübel ausreichender Länge benutzerdefiniert abgeschnitten ist, um als Dübel in Kombination mit einer Schraube für eine Abstandsmontageaufgabe eingesetzt zu werden. Die Fachleute auf dem technischen Gebiet werden verstehen, dass auch ein solcher Endlosdübel natürlich eine endliche Länge hat, die aber erheblich größer ist als die Länge eines einzelnen Dübels (zum Beispiel kann ein solcher Endlosdübel eine Spreizlänge von mindestens 10 cm aufweisen). Ein abgelängter Dübel, der auch als Dübelabschnitt eines Ablängdübels bezeichnet werden kann, kann anders als ein herkömmlicher Dübel zwei Endöffnungen gleicher Größe aufweisen. Die zwei Endöffnungen können identische oder sehr ähnliche Gestalt haben. Daher kann ein solcher abgelängter Dübel an der einen Seite von einer Randverstärkung frei sein und an der anderen Seite geöffnet sein, anstatt dort als Art Sackloch ausgebildet zu sein. Daher kann ein abgelängter Dübel auch eine Zylinderstruktur mit gegenüberliegenden Öffnungen aufweisen. Es ist vorteilhaft, einen erfindungsgemäßen Dübel, insbesondere Endlosdübel, mit einer Führungsspitze zu versehen, damit ein besseres und leichteres Einführen ermöglicht ist. Gerade ein Endlosdübel mit einer Einführspitze kann auf eine besondere Größe bzw. Länge oder einen bestimmten Zweck abgelängt werden und zuverlässig in ein Bohrloch eingeführt werden.

Gemäß einem exemplarischen Ausführungsbeispiel der Erfindung wird eine Anordnung aus mindestens einer gehärteten Schraube und mindestens einem Dübel (bzw. einem Ablängdübel, von dem ein vorgebbarer Abschnitt ablängbar ist) bereitgestellt. Diese Anordnung ermöglicht es, Anbauteile in einem benutzerseitig vorgebbaren Abstand an Verankerungsgründen jeglicher Art zu befestigen. Ein von Null unterschiedlicher Abstand zwischen Anbauteil und Verankerungsgrund kann somit definiert und dauerhaft aufrechterhalten werden. Der Erfindung liegt insbesondere die Erkenntnis zugrunde, dass es mit einer Schraube ausreichender Robustheit sowie aufgrund des Vorsehens der Schraube mit einem Gewinde über einen ausreichend langen Schraubenabschnitt hinweg möglich ist, eine solche Schraube bei einem Verankerungsgrund aus Vollmaterial direkt durch das Anbauteil durchzuschrauben und zum Beispiel selbstschneidend im Verankerungsgrund zu verankern. In einem anderen Szenario, in dem der Verankerungsgrund ein Material mit Hohlräumen ist (Hohlkörper), kann es dagegen vorteilhaft sein, zunächst einen Dübel ausreichender Länge in den Verankerungsgrund einzubringen und nachfolgend dieselbe Schraube, die im Falle eines als harten Vollkörper ausgestalteten Verankerungsgrunds direkt und selbstschneidend im Verankerungsgrund eingedreht wird, durch das Anbauteil hindurch zu schrauben und dann in den im Verankerungsgrund eingebrachten Dübel einzuschrauben. In diesem Fall erhöht der Dübel die Lasteinleitung in die Wand. Dies ermöglicht eine spannungsfreie Montage eines Anbauteils (zum Beispiel eines Fensterrahmens oder einer Türzarge) an einem Verankerungsgrund (zum Beispiel an einer Wand), ohne dass ein Monteur mehrere unterschiedliche Befestigungssysteme für unterschiedliche Verankerungsgründe mitführen muss. Anstelle des Mitführens eines ersten Befestigungssystems für poröse, weiche bzw. Hohlräume aufweisende Untergründe und eines zweiten Befestigungssystems für druckfeste Vollmaterialuntergründe ist es erfindungsgemäß möglich, ein flexibles System mit nur einer Schraube für alle Untergründe vorzusehen, die abhängig von der Konfiguration des Untergrunds mit oder ohne Dübel eingesetzt wird. Eine gewünschte Dübellänge kann durch Abschneiden eines Stücks von einem Ablängdübel bereitgestellt werden. Die erfindungsgemäße Anordnung erlaubt somit eine einfache und spannungsfreie Montage von Anbauteilen in nahezu allen Untergründen, ohne dass mehrere unterschiedliche Montagekits bevorratet und an einer Montagestelle mitgeführt werden müssen. Mit der erfindungsgemäß erreichbaren spannungsfreien Montage des Anbauteils an den Verankerungsgrund kann ein Verziehen des Anbauteils, wenn es an den Verankerungsgrund montiert ist, vermieden oder eliminiert werden.

Im Weiteren werden zusätzliche Ausführungsbeispiele des Montagekits beschrieben. Diese gelten auch für das Verfahren und für die Verwendung.

Die Schraube kann außer dem Gewindeteil einen Antrieb aufweisen. Mit dem Antrieb kann die Schraube betätigt werden. Der Antrieb kann eine beliebige Aufnahme für ein Werkzeug sein, zum Beispiel ein Schlitz oder Kreuz.

Gemäß einem Ausführungsbeispiel kann das Montagekit aus der gehärteten Schraube und dem Dübel bestehen, das heißt darüber hinaus keine weiteren technischen Komponenten aufweisen. Somit kann mit einfachsten Mitteln und einer sehr geringen Anzahl von Bauelementen eine für unterschiedlichste Verankerungsgründe bedarfsgerecht einsetzbare Lösung bereitgestellt werden.

Die Schraube kann einen Schraubenkopf und ein sich daran (direkt oder beabstandet) anschließendes Gewindeteil aufweisen. Das Gewindeteil kann sich bis zu einem gegenüberliegenden Ende der Schraube hin erstrecken. Mittels Vorsehens eines mittels eines Werkzeugs betätigbaren Schraubenkopfs ist eine benutzerfreundliche Montage und eine gute externe Zugänglichkeit zu Zwecken der Demontage ermöglicht. Das sich bis zum gegenüberliegenden Ende der Schraube hin erstreckende Gewindeteil (Außengewinde) ermöglicht bedarfsweise eine selbstschneidende Befestigung im Verankerungsgrund.

Gemäß einem exemplarischen Ausführungsbeispiel ist der Dübel ein Ablängdübel, von dem basierend auf der Tiefe der Bohrung ein entsprechendes Stück ablängbar ist. Ein solcher Ablängdübel kann zum Beispiel eine Art Endlosdübel sein, der zum Beispiel eine Spreizlänge von mindestens 10 cm, insbesondere mindestens 15 cm aufweist. Es kann zum Beispiel ein Dübelstück einer Länge in einem Bereich zwischen 10 cm und 25 cm, insbesondere in einem Bereich zwischen 14 cm und 18 cm, in den Verankerungsgrund eingebracht werden. Ein Benutzer kann unter Verwendung üblicher Zangenwerkzeuge oder dergleichen ein geeignet langes Stück dieses Ablängdübels abschneiden, womit ein Dübel in einer vorgebbaren Länge gebildet ist. Dies erlaubt die flexible Anpassbarkeit der Dübellänge an ein bestimmtes Szenario, insbesondere an die Art und Weise, wie oder an welchen Stellen in einem Verankerungsgrund Hohlkammern gebildet sind. Der Ablängdübel kann zum Beispiel ausreichend lang vorgesehen werden, um solche Hohlkammern zu überbrücken und somit guten Halt bereitzustellen. Es hat sich gezeigt, dass ein solcher von einem Ablängdübel abgelängter Dübel für die sichere und beabstandete Befestigung eines Anbauteils an einen Verankerungsgrund mit Hohlräumen gut geeignet ist. Der Dübel des Montagekits kann somit auch ein von einem Benutzer bedarfsgerecht abgelängtes Stück eines solchen Ablängdübels sein.

Gemäß einem exemplarischen Ausführungsbeispiel kann der Dübel ein Kunststoffdübel sein. Dieser eignet sich gut zum benutzerdefinierten Ablängen, ist kostengünstig und leichtgewichtig.

Gemäß einem exemplarischen Ausführungsbeispiel ist die Schraube eine selbstschneidende Betonschraube, das heißt sie kann derart ausgestaltet sein, dass sie bei Eindrehen in einen Verankerungsgrund aus Beton (insbesondere Vollbeton) ihr eigenes Gewinde schneidet. Dies erlaubt ein dübelfreies Eindrehen selbst in sehr harte, als Vollkörper ausgestaltete Verankerungsgründe, steht aber auch einer Verwendung der Schraube in Kombination mit einem Dübel zum Eindrehen in weniger Halt gebende, als Hohlkörper ausgestaltete Verankerungsgründe nicht entgegen.

Es ist auch vorteilhaft, die Schraube zu härten. Wenngleich eine besondere Härte im Einsatz mit Dübel nicht erforderlich ist, bietet sie beim Einsatz ohne Dübel den Vorteil, dass ein selbstschneidendes Bilden eines Gewindes selbst in einem Verankerungsgrund aus Beton oder anderen besonders harten Verankerungsgründen ermöglicht ist.

Zum Beispiel kann als Schraube des Montagekits eine Amo III Schraube der Firma Würth eingesetzt werden. Für die Verankerung in Vollkörperuntergründen, zum Beispiel Beton oder Vollstein, kann eine solche Amo III-Schraube ohne Dübel verwendet werden. Da eine Amo III-Schraube allerdings in Hohlraum aufweisenden Untergründen in manchen Fällen keine brauchbaren Haltewerte vermittelt, kann sie in diesem Szenario in Kombination mit einem Dübel eingesetzt werden. Insbesondere kann die Schraube als Amo III Schraube mit einem Schraubendurchmesser von 7,5 mm und einem Schraubenkopfdurchmesser von 12,0 mm (Typ 1 mit AW30) oder einem Schraubenkopfdurchmesser von 7,5 mm (Typ 2 mit AW25) oder einem Schraubenkopfdurchmesser von 8,0 mm (Typ 2 mit AW30) oder einem Schraubenkopfdurchmesser von 12,5 mm (Typ 3 mit AW30) ausgeführt sein.

Die Schraube kann zum Beispiel aus Stahl, insbesondere aus verzinktem Stahl, hergestellt sein. Die Schraube kann gehärtet und passiviert sein.

Gemäß einem exemplarischen Ausführungsbeispiel kann das Gewindeteil (mit Außengewinde) über dessen Gesamtlänge hinweg einen im Wesentlichen konstanten Querschnitt und eine im Wesentlichen konstante Gewindesteigung aufweisen. An einem Endabschnitt der Schraube kann ein solches Gewindeteil spitz zulaufend ausgestaltet sein. Ein solches Gewindeteil ist mit geringem Aufwand herstellbar und für die Versenkung in Verankerungsgründen sowie in einem Anbauteil gut geeignet. Es ist möglich, dass eine solche Schraube eine Länge in einem Bereich von 5 cm bis 30 cm, insbesondere in einem Bereich von 10 cm bis 20 cm aufweist. Somit kann die Schraube ausreichend lang vorgesehen werden, um für eine beabstandete Montage von üblichen Anbauteilen, wie zum Beispiel Fensterrahmen, an Verankerungsgründen wie zum Beispiel einer Wand, geeignet zu sein.

Es ist auch möglich, in dem Montagekit einen Satz derartiger Schrauben mit Gewinde vorzusehen, die sich hinsichtlich Länge und/oder Gewindesteigung und/oder Schraubenkopf und/oder Außendurchmesser unterscheiden.

Alternativ kann das Gewindeteil einen sich an den Schraubenkopf anschließenden ersten Gewindeabschnitt und einen sich an das Ende der Schraube anschließenden zweiten Gewindeabschnitt aufweisen. Der erste Abschnitt kann einen größeren Gewindedurchmesser haben als der zweite Abschnitt. In einem Szenario, in dem der zweite Abschnitt in einen Dübel in einer Bohrung des Verankerungsgrundes verankert wird, kann der Unterschied zwischen den beiden Gewindedurchmessern der beiden Abschnitte durch die Wanddicke des Dübels kompensiert werden. Ist dies der Fall, so ist es möglich, mit einem einzigen Bohrvorgang ein Durchgangsloch in dem Anbauteil und eine Bohrung (zum Beispiel ein Sackloch) in dem Verankerungsgrund zu schaffen, was eine einfachere Montage der Schraube ermöglicht. Es kann dann in benutzerfreundlicher Weise der Dübel durch die Bohrung in dem Anbauteil durchgesteckt und in das Bohrloch im Verankerungsgrund eingeführt werden.

Immer noch Bezug nehmend auf das zuvor beschriebene Ausführungsbeispiel kann eine Gewindesteigung des ersten Abschnitts gleich einer Gewindesteigung des zweiten Abschnitts sein. Indem die Gewindesteigung der beiden Abschnitte mit unterschiedlichen Außendurchmessern gleich gewählt wird, kann ein Einschrauben der Schraube in den Dübel in dem Bohrloch des Verankerungsgrunds und in das Durchgangsloch des Anbauteils simultan erfolgen. Dies trägt ebenfalls zu einer einfachen und spannungsfreien Montage bei.

Immer noch Bezug nehmend auf die zuvor beschriebenen Ausführungsbeispiele kann die Schraube zwischen dem ersten Abschnitt und dem zweiten Abschnitt einen gewindefreien Zwischenabschnitt aufweisen. Wenn ein Bereich der Längserstreckung der Schraube zwischen dem ersten Abschnitt und dem zweiten Abschnitt ohne Gewinde vorgesehen ist, kann dies eine einfache Prozessführung beim Bilden des Gewindes der Schraube begünstigen, da der Übergang zwischen den beiden Gewindeabschnitten unterschiedlichen Außendurchmessers eine technologische Herausforderung darstellen kann, genauso wie bei langen Schrauben.

Alternativ kann sich der erste Abschnitt aber auch unmittelbar an den zweiten Abschnitt anschließen, das heißt die Schraube von einem gewindefreien Zwischenabschnitt frei sein. Eine solche Ausgestaltung mit einem zwischen Schraubenkopf und Schraubenspitze durchgehenden Gewinde hat den Vorteil, dass praktisch die gesamte Schraubenlänge zur Verankerung bzw. zum Schneiden eines Innengewindes in Anbauteil und/oder Verankerungsgrund beitragen kann.

Das Montagekit kann eine Bedienungsanweisung aufweisen, die folgende Instruktionen (für einen Benutzer) enthält, die sich auf eine Anwendung des Montagekits beziehen: a) Ermitteln, ob der Verankerungsgrund ein Vollkörper oder ein Hohlkörper ist (zum Beispiel mittels Durchführens einer Testbohrung in den Verankerungsgrund oder mittels sonstigen Analysierens des Verankerungsgrunds oder einer technischen Spezifikation); b) falls der Verankerungsgrund ein Vollkörper ist, dübelfreies (das heißt direktes bzw. selbstschneidendes, ohne Dübel) Eindrehen der Schraube des Montagekits durch das Anbauteil (insbesondere unter Bilden eines Innengewindes in dem Anbauteil) hindurch in eine Bohrung in dem als Vollkörper ausgestalteten Verankerungsgrund (insbesondere unter Bilden eines Innengewindes in dem Verankerungsgrund); c) falls der Verankerungsgrund dagegen ein Hohlkörper ist, Eindrehen der Schraube durch das Anbauteil (insbesondere unter Bilden eines Innengewindes in dem Anbauteil) hindurch in den Dübel in einer Bohrung in dem als Hohlkörper ausgestalteten Verankerungsgrund (insbesondere ohne Bilden eines Innengewindes in dem Verankerungsgrund). Eine solche Bedienungsanleitung kann zum Beispiel in schriftlicher Form, zum Beispiel auf Papier gedruckt, oder in elektronischer Form, zum Beispiel als computerlesbare Datei, ausgeführt sein und einen Teil des Montagekits bilden bzw. diesem zugeordnet sein.

Im Weiteren werden zusätzliche Ausgestaltungen des Verfahrens beschrieben. Diese gelten jedoch auch für das Montagekit und die Verwendung.

Gemäß einem exemplarischen Ausführungsbeispiel kann der Dübel mittels Ablängens eines benutzerdefinierten Stücks eines Ablängdübels mit einer auf der Tiefe der Bohrung basierenden Länge bereitgestellt werden. Es kann also ein Ablängdübel vorgesehen werden, von dem ein Benutzer ein gewünschtes Stück abschneiden kann, basierend auf der Geometrie einer jeweils vorliegenden Verankerungsaufgabe. Dies ermöglicht das Bereitstellen eines flexiblen, kostengünstigen Systems, das auf strukturell einfachen Komponenten beruht, die es in ihrer gezielten Zusammenstellung ermöglichen, an einer Montagestelle mit sehr wenig vorgehaltenen Teilen eine beliebige Verankerungsaufgabe zu lösen.

Bei Treffen der Entscheidung, ob der Verankerungsgrund als Vollkörper oder als Hohlkörper angesehen wird, können unterschiedliche Kriterien angelegt werden. Zum Beispiel kann ein Verankerungsgrund aus Vollstein als Vollkörper angesehen werden. Ein Verankerungsgrund aus Vollbeton, das heißt einem nicht porösen Beton, kann ebenfalls als Vollkörper angesehen werden. Es ist auch möglich, einen Verankerungsgrund aus Vollmetall oder aus Holz oder aus Vollkeramik als Vollkörper anzusehen.

Es kann bei dem Ermitteln "Voiikörper oder Hohlkörper" ein Verankerungsgrund mit Leerräumen in einem Eindringbereich der Schraube als Hohlkörper angesehen werden. Zum Beispiel kann ein Verankerungsgrund aus Hohlblockstein (zum Beispiel ein Hohlräume aufweisender Ziegel oder Leichtbeton mit Luftporen und/oder Einschlüssen niedriger Dichte wie Blähton) oder ein poröser Verankerungsgrund (zum Beispiel poröser Beton) als Hohlkörper aufgefasst werden. Auch eine Zementmatrix mit Leichtzuschlägen bzw. Poren kann als Hohlkörper aufgefasst werden.

Gemäß einem exemplarischen Ausführungsbeispiel der Erfindung kann eine Mehrzahl von Schrauben unterschiedlicher Länge und/oder unterschiedlicher Durchmesser jeweils mit einem Schraubenkopf und einem Gewindeteil bereitgestellt werden, das sich bis zu einem gegenüberliegenden Ende der jeweiligen Schraube hin erstreckt. Basierend auf einem vorliegenden Anbauteil, einem vorliegenden Verankerungsgrund, einem vorgegebenen Abstand dieser Komponenten im montierten Zustand, einem Material zwischen den Komponenten (zum Beispiel Luft oder Dammmaterial), etc., kann dann eine jeweilige der Schrauben ausgewählt werden. Somit kann ein modularer Satz unterschiedlicher Schrauben mit einem Dübel für jeden Schraubendurchmesser bereitgestellt werden, um für alle Montageszenarien eine passende Kombination einsetzen zu können.

Insbesondere in einem Fall, in dem der Verankerungsgrund ein Hohlkörper ist, können ein Außendurchmesser der Bohrung in dem Verankerungsgrund und ein Außendurchmesser eines Durchgangslochs in dem Anbauteil gleich groß gebildet werden. Das Gewindeteil kann einen sich an den Schraubenkopf anschließenden ersten Abschnitt und einen sich an das Ende anschließenden zweiten Abschnitt aufweisen. Der erste Abschnitt kann einen größeren Gewindedurchmesser haben als der zweite Abschnitt. Gemäß diesem beschriebenen Verfahren können auch das Bilden einer Bohrung in dem Verankerungsgrund und das Bilden eines Durchgangslochs in dem Anbauteil mittels einer gemeinsam durchgeführten Bohrprozedur erfolgen. Hierfür kann das Anbauteil an den Verankerungsgrund angelegt werden, und dann können Anbauteil und Verankerungsgrund in gemeinsamen Bohrprozess gemeinsam gebohrt werden. In diesem Fall kann ein Dübel mit einem solchen Außendurchmesser bzw. mit einer solchen Wanddicke vorgesehen werden, dass durch den Dübel die unterschiedlichen Außendurchmesser der beiden Gewindeabschnitte zumindest teilweise ausgeglichen werden. Dies erlaubt eine einfache und schnelle Montage.

Gemäß einem exemplarischen Ausführungsbeispiel kann, falls der Verankerungsgrund ein Hohlkörper ist, in das Anbauteil ein Durchgangsloch eingebracht werden, der Dübel in die Bohrung eingeführt werden und sodann die Schraube durch das Durchgangsloch geschraubt und dann in den Dübel in der Bohrung eingeschraubt werden. Dadurch kann das Außengewinde der Schraube zunächst ein Innengewinde in dem Anbauteil schneiden und nachfolgend in den Dübel eingeschraubt werden.

Ferner kann, falls der Verankerungsgrund ein Vollkörper ist, in das Anbauteil ein Durchgangsloch eingebracht werden, die Schraube durch das Durchgangsloch geschraubt werden und dann selbstschneidend in die Bohrung des Verankerungsgrunds eingeschraubt werden. Während also im Falle eines Hohlkörpers die Schraube nicht als selbstschneidende Schraube in dem Verankerungsgrund eingesetzt wird, sondern mittels eines Dübels (zum Beispiel einer Dübelspreizung) befestigt wird, kann im Szenario eines Vollkörpers als Verankerungsgrund die selbstschneidende Eignung der Durchgangsschraube vorteilhaft eingesetzt werden, um mit ihrem Außengewinde sowohl in dem Durchgangsloch des Anbauteils als auch in der Bohrung des Verankerungsgrunds jeweils ein Innengewinde zu schneiden.

Das Anbauteil kann zum Beispiel einen Fensterrahmen oder ein Fenster aufweisen oder daraus bestehen. Alternativ kann das Anbauteil aber auch eine Türzarge, einen Blockrahmen oder ein sonstiges Rahmenbauteil darstellen. Zum Beispiel kann das Anbauteil aus Holz, Kunststoff, Metall, Keramik und/oder Stein gefertigt sein. Als Verankerungsgrund können sämtliche Beton-und Mauerwerksbaustoffe verwendet werden, von Vollziegeln über Lochziegel bis zu Porenbeton, Holz, Metall, etc.

Im Folgenden werden exemplarische Ausführungsbeispiele der vorliegenden Erfindung mit Verweis auf die folgenden Figuren detailliert beschrieben.
Fig. 1 zeigt ein Montagekit gemäß einem exemplarischen Ausführungsbeispiel der Erfindung mit einer Schraube und einem Ablängdübel als separate Komponenten.
Fig. 2 zeigt ein Montagekit gemäß einem anderen exemplarischen Ausführungsbeispiel der Erfindung in einem montierten Zustand einer Schraube und eines Dübels.
Fig. 3 zeigt eine Schraube und einen Dübel eines Montagekits gemäß einem exemplarischen Ausführungsbeispiel der Erfindung in einem Zustand, in dem die Schraube und der Dübel in einem als Hohlkörper ausgebildeten Verankerungsgrund versenkt ist und einen vorgebbaren Abstand zwischen einem Anbauteil und dem Verankerungsgrund aufrechterhalten.
Fig. 4 zeigt eine Schraube eines Montagekits gemäß einem anderen exemplarischen Ausführungsbeispiel der Erfindung.
Fig. 5 zeigt die in Fig. 4 dargestellte Schraube in einem Betriebszustand, in dem diese in einen als Vollkörper ausgebildeten hohlraumfreien Verankerungsgrund eingedreht ist und einen vordefinierten Abstand zwischen dem Verankerungsgrund und einem Anbauteil aufrechterhält.
Fig. 6 zeigt exemplarisch die Ausgestaltung eines als Hohlkörper ausgebildeten Ziegelsteins.
Fig. 7 ist ein Flussdiagramm, das unterschiedliche Schritte eines Verfahrens zum beabstandeten Montieren eines Anbauteils an einen Verankerungsgrund zeigt.

Gleiche oder ähnliche Komponenten in unterschiedlichen Figuren sind mit gleichen Bezugsziffern versehen.

Gemäß einem exemplarischen Ausführungsbeispiel der Erfindung ist ein flexibles System zur Befestigung von Fenstern oder anderen Anbauteilen an einer Wand als Beispiel für einen Verankerungsgrund bereitgestellt. Bei einem solchen System kann eine ausreichend harte Schraube für eine selbstschneidende Direktmontage in einem harten Untergrund (welcher in einem Bereich, in den die Schraube eindringt, von Hohlräumen frei ist) bereitgestellt werden, beispielsweise eine Schraube des Typs Amo III der Firma Würth. Falls der Untergrund keine ausreichende Härte darstellt, kann eine solche Schraube gemeinsam mit einem Dübel verwendet werden, zum Beispiel bei weichen Untergründen, porösen Untergründen oder Hohlblocksteinen.

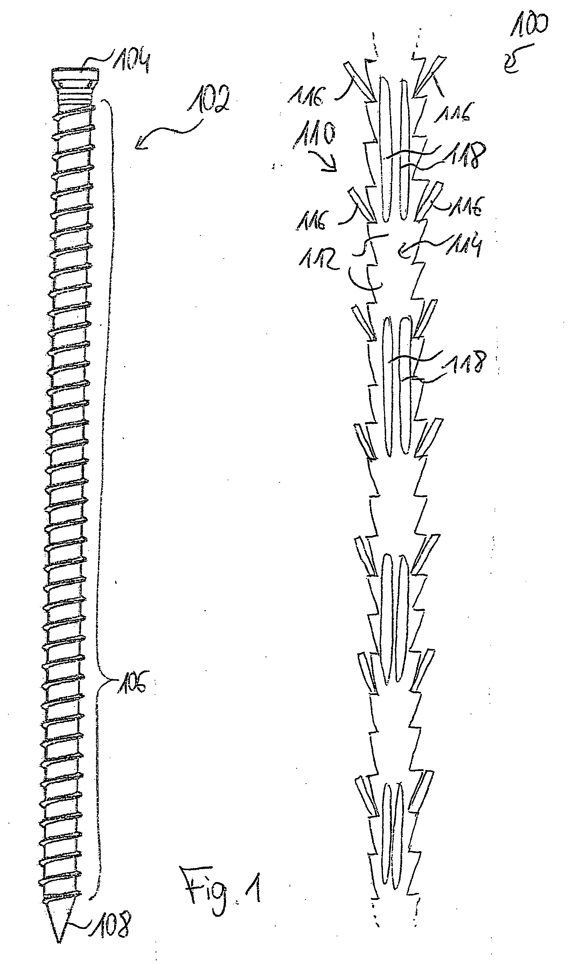

Bei einem Einsatz einer solchen Schraube ohne Dübel kann eine Vorbohrung in den Fensterrahmen und den Untergrund erfolgen. Dann kann eine solche Amo III Schraube (Fig. 1) oder dergleichen durch den Fensterrahmen in den Untergrund eingeschraubt werden, ohne dass ein Dübel eingesetzt wird. Somit wird die Schraube dann direkt durch den Fensterrahmen in den Untergrund geschraubt (eine Vorbohrung ist in diesem Fall vorteilhaft).

In einem anderen Fall wird dieselbe Anordnung von Schraube und Dübel verwendet, wie in dem beschriebenen ersten Fall. In einem porösen Untergrund wird jedoch dann der Dübel (beispielsweise ein Kunststoffdübel ohne Schaft) ins Bohrloch eingebracht und dann die Schraube durch das Anbauteil in den Dübel eingedreht. Hier kann der Dübel bevorzugt als Stück eines Endlosdübels realisiert sein.

Das Fenster kann dann, aufgrund der Befestigungswirkung des Gewindes der Schraube, auf Abstand zu dem Untergrund gehalten werden, wobei kein Ziehen des Rahmens gegen den Untergrund erforderlich ist bzw. erfolgt. Es ist ausreichend, im Rahmen nur ein kleines Bohrloch zu bilden, da der Dübel nicht durch den Rahmen geschoben werden muss, sondern in das Bohrloch vorgesteckt werden kann.

Die Schraube kann gehärtet sein, damit ein direktes Einschrauben in den harten Untergrund (zum Beispiel Stein oder Beton) ermöglicht ist. Dies ist wichtig, wenn kein Dübel verwendet wird. Mit einer normalen Dübelschraube ist diese Anwendung nicht möglich, da diese zu weich ist.

In einer Variante kann eine Schraube mit einem ersten Gewindeabschnitt zum Einschrauben in den Untergrund und einem zweiten Gewindeabschnitt mit größerem Außendurchmesser und gleicher Steigung zur Befestigung im Fensterrahmen verwendet werden. Das Bohrloch im Rahmen kann dann gleich groß wie das Bohrloch im Untergrund gewählt werden, was ein gemeinsames Ausbilden der beiden Bohrlöcher ermöglicht.

In einer Variante kann eine Schraube einen gewindefreien Abschnitt zwischen einem Gewinde auf einem kleineren Schaftdurchmesser an der Schraubenspritze und einem Gewinde auf einem größeren Schaftdurchmesser am Schraubenkopf aufweisen. Alternativ ist aber auch ein durchgehendes Gewinde ohne einen solchen Zwischenraum einsetzbar.

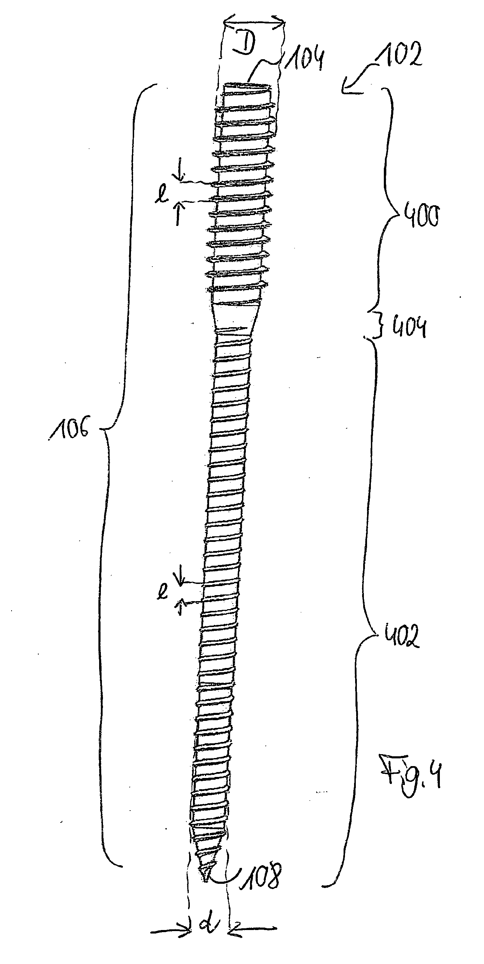

Ein Vorteil einer Konfiguration mit unterschiedlich großen Gewindedurchmessern (Fig. 4) kann darin gesehen werden, dass der Dübel direkt durch das Fensterprofil hindurch in das Bohrloch im Verankerungsgrund gesteckt werden kann, weil die Dübelbohrung im Verankerungsgrund gleich der Bohrung im Rahmen sein kann, insbesondere auch in dem Fall, wenn Löcher im Rahmen vorgebildet sind und durch diese Löcher die Löcher im Verankerungsgrund gebohrt werden. Somit kann ein flexibles System für nahezu alle Untergründe bereitgestellt werden. Mit ein- und derselben Schraube kann sowohl gedübelt als auch direkt in den Untergrund geschraubt werden. Bei Verwendung einer ausreichend langen Spreizzone (zum Beispiel eine Spreizlänge von mindestens 10 cm) eines Kunststoffdübels können lange Schrauben in Steinen mit großen Kammern, zum Beispiel Wienerberger T9 Stein, befestigt werden. Es ist erfindungsgemäß entbehrlich, dass der Anwender zwei oder mehr Schrauben bevorraten muss (eine für harte Untergründe zum Direktverschrauben und eine für Dübelmontage), sondern kann dieselbe Schraube wahlweise mit oder ohne Dübel verwenden, je nach Untergrund.

Im Weiteren wird Bezug nehmend auf **Fig. 1** ein Montagekit 100 gemäß einem exemplarischen Ausführungsbeispiel der Erfindung beschrieben.

Das Montagekit 100 ist zum beabstandeten Montieren eines Fensterrahmens an einer beliebigen Wand (beides in Fig. 1 nicht gezeigt) ausreichend. Um das Montagekit 100 für beliebige Wände einsetzbar zu machen, weist es eine aus Stahl gefertigte, gehärtete Schraube 102 mit einem Schraubenkopf 104 und einem sich daran unmittelbar anschließenden Gewindeteil 106 auf. Das Gewindeteil 106 erstreckt sich von dem Schraubenkopf 104 bis zu einem gegenüberliegenden Ende 108 der Schraube 102. Wie in Fig. 1 gezeigt, läuft die Schraube 102 an dem Ende 108 spitz zu. Die Schraube 102 hat in diesem Ausführungsbeispiel eine Länge von 20 cm. Die Schraube 102 ist derart gehärtet, dass sie selbst bei Eindrehen in eine Bohrung in einer Vollbetonwand selbstschneidend ein Gewinde in den Beton schneiden kann.

Ferner ist ein Ablängdübel 110 Teil des Montagekits 100. Der Ablängdübel 110 ist ein einstückiger und einstoffiger Kunststoffdübel sehr großer Länge, der einen aus Segmenten 112 gefertigten Basiskörper 114 aus einem Kunststoffmaterial aufweist. Ferner sind, jeweils um einen konstanten Abstand voneinander beabstandet, Spreizglieder 116 vorgesehen, die sich bei Eindringen der Schraube 102 in einen Abschnitt des Ablängdübels 110 nach außen aufspreizen. Ferner sind Spreizöffnungen 118 in vordefinierbaren Bereichen des Dübelkörpers 114 gebildet.

Um für eine bestimmte Montageaufgabe die Schraube 102 in Kombination mit einem Stück des Ablängdübels 110 (der sehr viel länger als die Schraube 102 ist) einsetzen zu können, ist von dem Dübel 110 (zum Beispiel basierend auf der Tiefe einer Bohrung und/oder auf Basis anderer Kriterien) ein benutzerdefiniertes Stück ablängbar. Ein solches Ablängen kann unter Verwendung herkömmlicher Werkzeuge, wie zum Beispiel einer Beißzange, erfolgen.

Gemäß einem exemplarischen Ausführungsbeispiel kann die Schraube 102 in zwei unterschiedlichen Betriebszuständen eingesetzt werden.

In einem ersten Betriebszustand, in dem der Fensterrahmen mit einer als Vollkörper ausgestalteten Wand verbunden werden soll, wird die Schraube 102 durch den Fensterrahmen hindurch in eine Bohrung der Wand dübelfrei eingedreht. Der Dübel 110 wird dann nicht benötigt. Wenn die Wand zum Beispiel eine Vollbetonwand oder eine Vollsteinwand ist, so kann die Schraube 102 bei Eindrehen in eine Bohrung in einer solchen Wand sich ihr eigenes Gewinde schneiden und damit sicher in der Wand verankert werden.

In einem alternativen Betriebszustand soll die Schraube 102 eine beabstandete Montage des Fensterrahmens an einer Wand ermöglichen, die als Hohlkörper ausgebildet ist. Wenn zum Beispiel die Wand aus Hohlblocksteinen gebildet ist, kann das Gewinde der Schraube 102 nicht ausreichend fest in einer solchen Wand eingreifen, womit in manchen Fällen keine ausreichend sichere Montage des Fensterrahmens an einer solchen Wand garantiert werden kann. Deswegen wird in einem solchen Szenario die Schraube 102 durch den Fensterrahmen hindurch in den Dübel 110 in einer Bohrung in der als Hohlkörper ausgestalteten Wand eingedreht. Ist die Spreizzone des abgelängten Dübels 110 in der Wand ausreichend groß, so führt dies trotz des Vorhandenseins von Hohlräumen zu einer ausreichend sicheren Verankerung.

Aufgrund des modularen Vorsehens des flexibel ablängbaren Ablängdübels 110 in Kombination mit der selbstschneidenden Schraube 102 kann somit für alle Szenarien eine spannungsfreie und verankerungssichere beabstandete Montage des Fensterrahmens (oder jedes anderen Anbauteils) an einer beliebigen Wand erfolgen.

Die Schraube der Fig. 1 weist in einer alternativen Ausführung im Kopfbereich eine höhere Gewindehöhe auf (bei konstantem Schaftdurchmesser), um beispielsweise in Kunststofffensterrahmen einen besseren Halt zu bewirken.

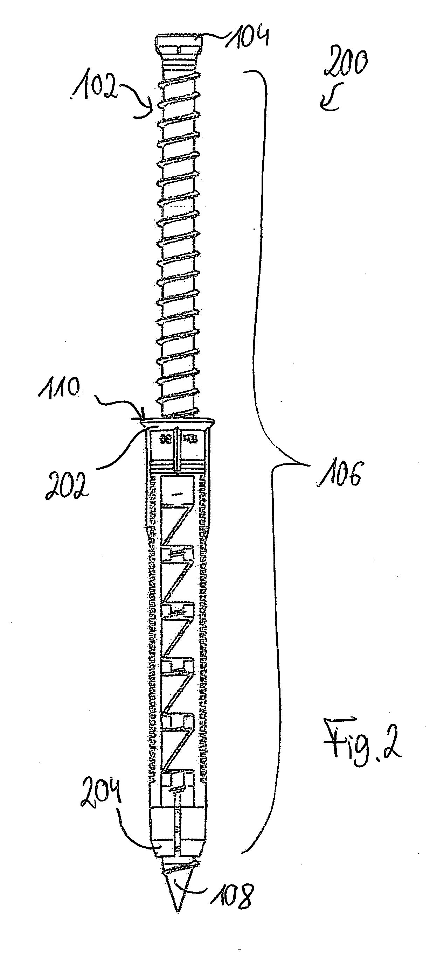

**Fig. 2** zeigt ein Montagekit 200 gemäß einem anderen Ausführungsbeispiel der Erfindung. Bei dem Montagekit 200 ist die Schraube 102 gebildet, wie in Fig. 1 beschrieben. Allerdings ist anstelle eines ablängbaren Ablängdübels in Fig. 2 ein Dübel 110 einer vorbestimmten Länge vorgesehen. Wie in Fig. 2 gezeigt, kann ein unterer Abschnitt der Schraube 102 in den Dübel 110 eingedreht werden. Anders als in Fig. 1 weist der Dübel 110 gemäß Fig. 2 einen dem Bohrlochäußeren zugewandten Verstärkungsring 202 und einen dem Bohrlochinneren zugewandten Verengungsbereich 204 auf. Der Dübel 110 ist, da aus Kunststoff gefertigt, ggf. ablängbar.

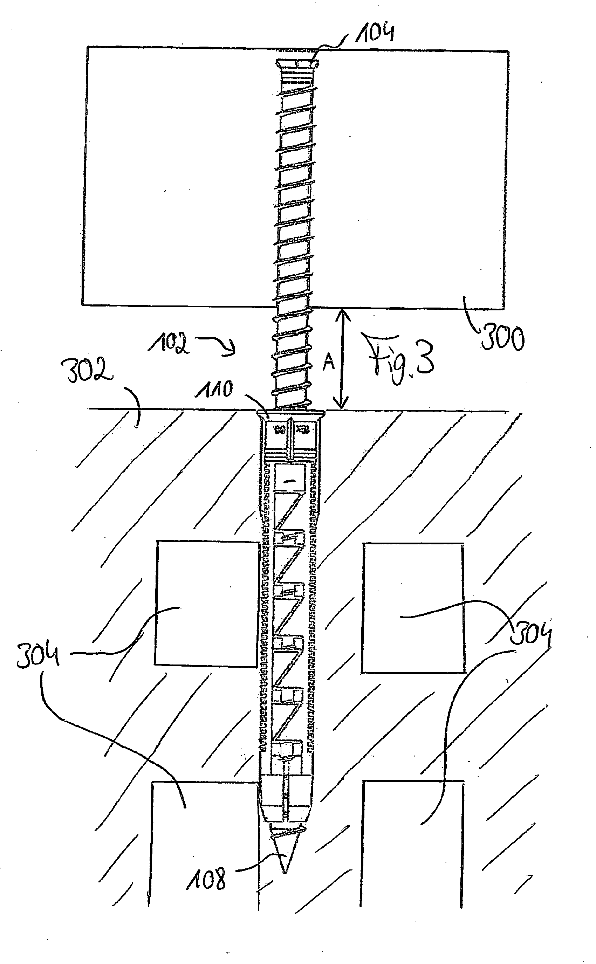

**Fig. 3** zeigt, wie das Montagekit 200 gemäß Fig. 2 verwendet werden kann, um einen Fensterrahmen 300 an einer Wand 302 aus Hohlblocksteinen sicher zu verankern.

Wie in Fig. 3 gezeigt, sind in der Wand 302 aus Hohlblocksteinen größere Hohlräume 304 gebildet. In einem Betriebszustand, in dem die Schraube 102 ohne den Dübel 110 verwendet würde, könnte über größere Abschnitte der Schraube 102 hinweg keine ausreichend sichere Befestigung in der Wand 302 garantiert werden, da die Schraube 102 abschnittsweise in die Hohlräume 104 greifen würde. Aus diesem Grund wird bei dem in Fig. 3 gezeigten Szenario in eine Bohrung in der Wand 302 zunächst der Dübel 110 eingesetzt. Ferner wird in dem Fensterrahmen 300 ein Durchgangsloch gebohrt. Die Schraube 104 wird dann in die Bohrung in der Wand 302 durch das Durchgangsloch in dem Fensterrahmen 300 eingedreht. Dadurch wird die Schraube 102 einerseits in dem Dübel 110 befestigt. Andererseits führt das Eindrehen zu einem Selbstschneiden eines Gewindes in dem Fensterrahmen 300. Die Spreizwirkung des Dübels 110 verbessert den Halt in der Wand 302.

In einem nicht gezeigten anderen Betriebszustand, in dem die Wand 302 keine Hohlräume 304 aufweist, sondern zum Beispiel als Vollbetonwand oder Vollsteinwand ausgeführt ist, kann dagegen die Schraube 102 sowohl in dem Fensterrahmen 300 als auch in der Wand als selbstschneidende Schraube 102 eingesetzt werden. Die Verwendung des Dübels 110 ist in diesem Betriebszustand entbehrlich, da die Haltekraft der Schraube 102 in der Wand hier ausreicht.

Die Schraube 102 und der Dübel 110 erlauben somit ein beabstandetes Montieren des Anbauteils 300 an der Wand 302, das heißt eine derartige Montage, dass das an der Wand 302 befestigte Anbauteil 300 in einem festen Abstand "A" von der Wand 302 entfernt bleibt.

**Fig. 4** zeigt eine Schraube 102 eines Montagekits gemäß einem anderen exemplarischen Ausführungsbeispiel der Erfindung. Die in Fig. 4 gezeigte Schraube 102 kann mit einem Ablängdübel 110, wie in Fig. 1 gezeigt, oder mit einem Dübel 110 vorbestimmter Länge, wie in Fig. 2 gezeigt, zum Bilden eines erfindungsgemäßen Montagekits kombiniert werden.

Bei der Schraube 102 gemäß Fig. 4 weist das Gewindeteil 106 einen sich an den Schraubenkopf 104 anschließenden ersten Abschnitt 400 und einen sich an das gegenüberliegende Ende 108 anschließenden zweiten Abschnitt 402 auf. Wie in Fig. 4 gezeigt, hat der erste Abschnitt 400 einen größeren Schaftdurchmesser als der zweite Abschnitt 402. Ferner weist das Gewinde in diesem Abschnitt eine größere Höhe auf. Der Gewindedurchmesser des ersten Abschnitts 400 ist mit "D" bezeichnet, wohingegen der Gewindedurchmesser des zweiten Abschnitts 402 mit "d" bezeichnet ist. Die Gewindesteigung, die durch die Ganghöhe "F" geprägt ist, ist im ersten Abschnitt 400 gleich groß wie im zweiten Abschnitt 402.

Wie ferner in Fig. 4 gezeigt ist, ist zwischen dem ersten Abschnitt 400 und dem zweiten Abschnitt 402 ein gewindefreier Zwischenabschnitt 404 vorgesehen. Das Vorsehen eines solchen gewindefreien Abschnitts 404 ermöglicht ein einfaches Herstellen des Gewindes, da der sich verändernde Außendurchmesser in dem Zwischenabschnitt 404 für das Bilden des Gewindes eine technologische Herausforderung darstellen kann.

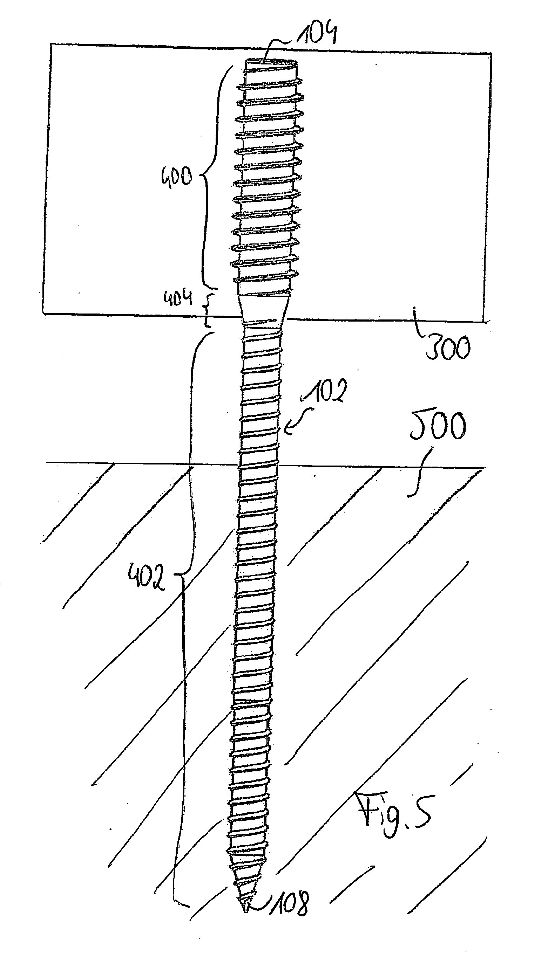

**Fig. 5** zeigt, wie die in Fig. 4 gezeigte Schraube 102 zum Beabstanden einer als Vollbetonwand ausgestalteten Wand 500 von einem Fensterrahmen 300 eingesetzt werden kann. Zunächst ist das Vorsehen eines Dübels 110 in diesem Betriebszustand nicht erforderlich, da die gehärtete und selbstschneidende Schraube 102 sich in einem Loch in der Betonwand 500 über die gesamte Lochtiefe hinweg mittels des zweiten Gewindeabschnitts 402 ihr eigenes Gewinde schneidet. Der erste Gewindeabschnitt 400 schneidet sich innerhalb des Fensterrahmens 300 ebenfalls ein eigenes Gewinde, so dass eine beabstandete und mechanisch feste Montage des Fensterrahmens 300 gegenüber der Wand 500 möglich ist.

In einem alternativen Betriebszustand, in dem zum Beispiel eine Hohlwand 302 eingesetzt wird, hat der unterschiedliche Außendurchmesser der Gewindeabschnitte 400, 402 besondere Vorteile. Der Unterschied der Außendurchmesser "D" und "d" kann nämlich so vorgesehen werden, dass in Kombination mit der Wandungsdicke eines Dübels 110 die erforderliche Lochgröße in einer als Hohlkörper ausgestalteten Wand 302 sowie die erforderliche Durchgangsbohrung in dem Fensterrahmen 300 (innerhalb von Toleranzen) gleich groß sind. Dies ermöglicht es dann, die Sacklochbohrung in der Wand und die Durchgangsbohrung in dem Anbauteil in einem gemeinsamen Bohrschritt zu bilden, was das Verfahren beschleunigt.

Bei einer solchen Durchsteckmontage ist ein gemeinsames Durchbohren des Fensterrahmens 300 und der Wand 500 zum Beispiel mittels eines Steinbohrers möglich, sofern zum Beispiel der Fensterrahmen 300 aus Holz und die Wand 500 aus Beton ist. Ferner ist ein gemeinsames Durchbohren des Fensterrahmens 300 und der Wand 500 zum Beispiel mittels eines Allzweckbohrers möglich, sofern zum Beispiel der Fensterrahmen 300 aus Holz oder Kunststoff und die Wand 500 ein Hohlraumkörper ist.

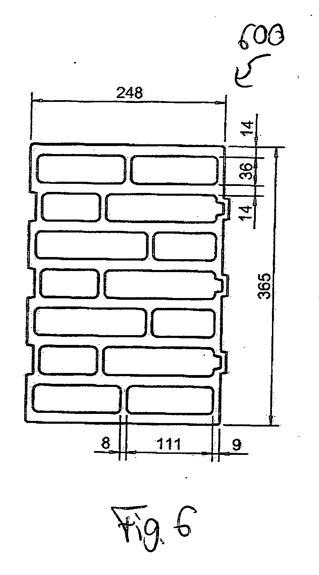

**Fig. 6** zeigt einen Ziegel 600 als Beispiel für einen Hohlkörper, bei dem eine Schraube 102 in Kombination mit einem Dübel 110 eingesetzt werden soll.

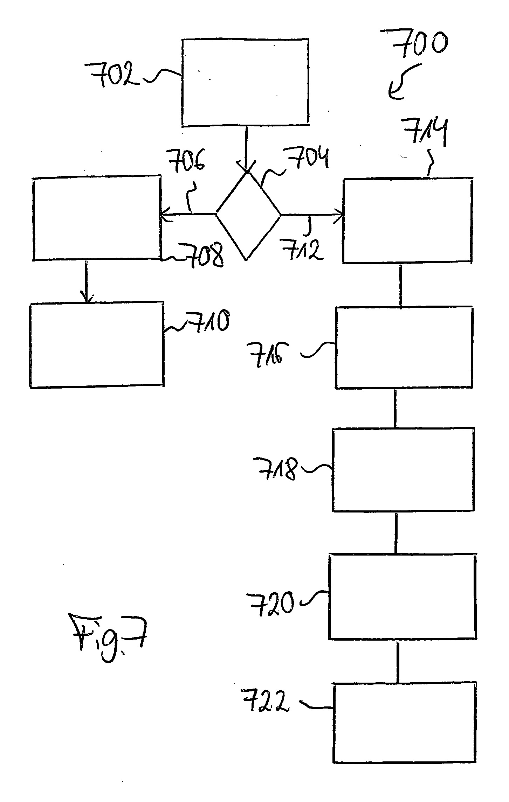

Im Weiteren wird Bezug nehmend auf Fig. 7 ein Blockdiagramm 700 eines Verfahrens zum beabstandeten Montieren eines Anbauteils an einen Verankerungsgrund beschrieben.

Zunächst wird in einem Block 702 ein Montagekit bereitgestellt, das die oben beschriebene Schraube mit Gewindeteil sowie einen Dübel aufweist.

Im Block 704 wird ermittelt, ob der vorliegende Verankerungsgrund ein Vollkörper oder ein Hohlkörper ist.

Ist der Verankerungsgrund ein Vollkörper, so ist im Weiteren eine Verwendung des Dübels des Montagekits nicht erforderlich. In diesem Fall erfolgt, siehe Block 708, eine gemeinsame Bohrung von Anbauteil und Verankerungsgrund. Mit anderen Worten wird in dem Verankerungsgrund ein Sackloch gebildet, wohingegen in dem Anbauteil ein Durchgangsloch gebildet wird. In einem nachfolgenden Block 710 wird dann die Schraube durch das Anbauteil hindurch in die Bohrung in dem als Vollkörper ausgestalteten Verankerungsgrund direkt, das heißt ohne Dübel, eingedreht. Damit ist die Montage beendet.

Falls die Abfrage in Block 704 zu dem Ergebnis führt, dass der Verankerungsgrund ein Hohlkörper ist, vergleiche Bezugszeichen 712, dann wird in einem nachfolgenden Schritt 714 zunächst eine Bohrung in dem Verankerungsgrund gebildet. In einem Schritt 716 wird von einem Ablängdübel ein benutzerdefiniert großes Stück entsprechend der Bohrlochtiefe abgelängt. In einem nachfolgenden Schritt 718 wird der abgelängte Dübel dann in den als Hohlkörper ausgestalteten Verankerungsgrund eingesetzt. In einem nachfolgenden Schritt 720 wird in dem Anbauteil eine Bohrung vorgenommen. Dieser Schritt kann auch zuvor, zum Beispiel zwischen Blöcken 714 und 716 erfolgen. In einem nachfolgenden Schritt 722 erfolgt dann ein Eindrehen der Schraube durch das Anbauteil hindurch in den Dübel in einer Bohrung in dem als Hohlkörper ausgestalteten Verankerungsgrund.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Montagekit (100) zum beabstandeten spannungsfreien Montieren eines Anbauteils (300) an einen Verankerungsgrund (302, 500), wobei das Montagekit (100) aufweist:
eine Schraube (102) mit einem Gewindeteil (106) und einem Antrieb, wobei die Schraube (102) ausgebildet ist, bei Eindrehen in eine Bohrung in einer Betonwand selbstschneidend ein Gewinde zu bilden; und
einen Dübel (110);
wobei die Schraube (102) eingerichtet ist, durch das Anbauteil (300) hindurch in eine Bohrung in einem als Vollkörper ausgestalteten Verankerungsgrund (500) dübelfrei eingedreht zu werden;
wobei die Schraube (102) eingerichtet ist, durch das Anbauteil (300) hindurch in den Dübel (110) in einer Bohrung in einem als Hohlkörper ausgestalteten Verankerungsgrund (302) eingedreht zu werden.

2. Montagekit (100) nach Anspruch 1, wobei der Dübel (110) ein abgelängtes Stück eines Ablängdübels oder ein Ablängdübel ist, das heißt basierend auf der Tiefe der Bohrung abgelängt ist.

3. Montagekit (100) nach Anspruch 1 oder 2, wobei die Schraube (102) gehärtet ist.

4. Montagekit (100) nach einem der Ansprüche 1 bis 3, wobei das Gewindeteil (106) einen sich an einen Schraubenkopf (104) der Schraube (102) anschließenden ersten Gewindeabschnitt (400) und einen sich an ein gegenüberliegendes Ende (108) der Schraube (102) anschließenden zweiten Gewindeabschnitt (402) aufweist, wobei der erste Gewindeabschnitt (400) einen größeren Gewindedurchmesser hat als der zweite Gewindeabschnitt (402).

5. Montagekit (100) nach Anspruch 4, wobei eine Gewindesteigung des ersten Gewindeabschnitts (400) und eine Gewindesteigung des zweiten Gewindeabschnitts (402) gleich sind.

6. Montagekit (100) nach Anspruch 4 oder 5, aufweisend eines der folgenden Merkmale:
die Schraube (102) weist zwischen dem ersten Gewindeabschnitt (400) und dem zweiten Gewindeabschnitt (402) einen gewindefreien Zwischenabschnitt (404) auf;
der erste Gewindeabschnitt (400) schließt sich unmittelbar an den zweiten Gewindeabschnitt (402) an.

7. Montagekit (100) nach einem der Ansprüche 1 bis 6, aufweisend eine Bedienungsanweisung, die folgende Instruktionen an einen Benutzer enthält:
Ermitteln (704), ob der Verankerungsgrund (302, 500) ein Vollkörper oder ein Hohlkörper ist;
falls der Verankerungsgrund (500) ein Vollkörper ist (706), dübelfreies Eindrehen (710) der Schraube (102) durch das Anbauteil (300) hindurch in eine Bohrung in dem als Vollkörper ausgestalteten Verankerungsgrund (500);
falls der Verankerungsgrund (302) ein Hohlkörper ist (712), Eindrehen (722) der Schraube (102) durch das Anbauteil (300) hindurch in den Dübel (110) in einer Bohrung in dem als Hohlkörper ausgestalteten Verankerungsgrund (500).

8. Verfahren (700) zum beabstandeten spannungsfreien Montieren eines Anbauteils (300) an einen Verankerungsgrund (302, 500), wobei das Verfahren (700) aufweist:
Bereitstellen (702) einer Schraube (102) mit einem Gewindeteil (106), wobei die Schraube (102) ausgebildet ist, bei Eindrehen in eine Bohrung in einer Betonwand selbstschneidend ein Gewinde zu bilden;
Bereitstellen (702) eines Dübels (110);
Ermitteln (704), ob der Verankerungsgrund (302, 500) ein Vollkörper oder ein Hohlkörper ist;
falls der Verankerungsgrund (500) ein Vollkörper ist (706), dübelfreies Eindrehen (710) der Schraube (102) durch das Anbauteil (300) hindurch in eine Bohrung in dem als Vollkörper ausgestalteten Verankerungsgrund (500);
falls der Verankerungsgrund (302) ein Hohlkörper ist (712), Eindrehen (722) der Schraube (102) durch das Anbauteil (300) hindurch in den Dübel (110) in einer Bohrung in dem als Hohlkörper ausgestalteten Verankerungsgrund (500).

9. Verfahren (700) nach Anspruch 8, wobei der Dübel (110) mittels Ablängen (716) von einem Ablängdübel (110) mit einer auf der Tiefe der Bohrung basierenden Länge bereitgestellt wird.

10. Verfahren (700) nach Anspruch 8 oder 9, wobei bei dem Ermitteln (704) ein Verankerungsgrund (500) aus Vollstein, ein Verankerungsgrund (500) aus Vollbeton, ein Verankerungsgrund (500) aus Vollmetall oder ein Verankerungsgrund (500) aus Vollkeramik als Vollkörper angesehen wird.

11. Verfahren (700) nach einem der Ansprüche 8 bis 10, wobei bei dem Ermitteln (704) ein Verankerungsgrund (302) aus Hohlblockstein oder ein poröser Verankerungsgrund (302) als Hohlkörper angesehen wird.

12. Verfahren (700) nach einem der Ansprüche 8 bis 11, wobei eine Mehrzahl von Schrauben (102) unterschiedlicher Länge jeweils mit einem Gewindeteil (106) bereitgestellt wird und basierend auf dem Anbauteil (300) und dem Verankerungsgrund (302, 500) eine jeweilige der Schrauben (102) zum beabstandeten Montieren des Anbauteils (300) an dem Verankerungsgrund (302, 500) ausgewählt wird.

13. Verfahren (700) nach einem der Ansprüche 8 bis 12, wobei, falls der Verankerungsgrund (302) ein Hohlkörper ist (712), ein Außendurchmesser der Bohrung in dem Verankerungsgrund (302) und ein Außendurchmesser eines Durchgangslochs in dem Anbauteil (300) gleich groß gebildet werden (714, 720), und wobei das Gewindeteil (106) einen sich an einen Schraubenkopf (104) der Schraube (102) anschließenden ersten Gewindeabschnitt (400) und einen sich an ein gegenüberliegendes Ende (108) der Schraube (102) anschließenden zweiten Gewindeabschnitt (402) aufweist, wobei der erste Gewindeabschnitt (400) einen größeren Gewindedurchmesser hat als der zweite Gewindeabschnitt (402).

14. Verfahren (700) nach einem der Ansprüche 8 bis 13, ferner aufweisend mindestens eines der folgenden Merkmale:
falls der Verankerungsgrund (302) ein Hohlkörper ist (712), wird in das Anbauteil (300) ein Durchgangsloch eingebracht (720), der Dübel (110) in die Bohrung eingeführt (718), und die Schraube (102) durch das Durchgangsloch geschraubt und dann in den Dübel (110) in der Bohrung eingeschraubt (722);
falls der Verankerungsgrund (500) ein Vollkörper ist (706), wird in das Anbauteil (300) ein Durchgangsloch eingebracht (708), die Schraube (102) durch das Durchgangsloch geschraubt und dann selbstschneidend in die Bohrung eingeschraubt (710);
das Anbauteil (300) weist einen Fensterrahmen und/oder der Verankerungsgrund (302, 500) weist eine Wand auf.

15. Verwendung eines abgelängten Dübels (110) und einer gehärteten Schraube (102) mit einem Gewindeteil (106) zum beabstandeten spannungsfreien Montieren eines Anbauteils (300) an einen als Hohlkörper ausgestalteten Verankerungsgrund (302), wobei die Schraube (102) ausgebildet ist, bei Eindrehen in eine Bohrung in einer Betonwand selbstschneidend ein Gewinde zu bilden.

## Claims

1. Mounting kit (100) for spaced tension-free mounting an attachment part (300) to an anchorage ground (302, 500), wherein the mounting kit (100) comprises:
a screw (102) with a thread part (106) and a drive, wherein the screw (102) is adapted for self-cuttingly forming a thread when screwing into a bore hole in a concrete wall; and
a dowel (110);
wherein the screw (102) is adapted to be dowel-free screwed through the attachment part (300) into a bore hole in an anchorage ground (500) which is designed as a full body;
wherein the screw (102) is adapted to be screwed through the attachment part (300) into the dowel (110) in a bore hole in an anchorage ground (302) which is designed as a hollow body.

2. Mounting kit (100) according to claim 1, wherein the dowel (110) is a cutted-to-length piece of a cutting-to-length dowel or is a cutting-to-length dowel, that is, cutted-to-length based on the depth of the bore hole.

3. Mounting kit (100) according to claim 1 or 2, wherein the screw (102) is hardened.

4. Mounting kit (100) according to one of the claims 1 to 3, wherein the thread part (106) comprises
a first thread portion (400) adjoining to a screw head of the screw (102), and
a second thread portion (402) adjoining to an opposite end (108) of the screw (102),
wherein the first thread portion (400) has a larger thread diameter than the second thread portion (402).

5. Mounting kit (100) according to claim 4, wherein a thread pitch of the first thread portion (400) and a thread pitch of the second thread portion (402) are equal.

6. Mounting kit (100) according to claim 4 or 5, comprising one of the following features:
the screw (102) comprises a thread-free intermediate portion (404) between the first thread portion (400) and the second thread portion (402);
the first thread portion (400) directly adjoins to the second thread portion (402).

7. Mounting kit (100) according to one of the claims 1 to 6, comprising an operation instruction which includes the following instructions to a user:
determining (704) whether the anchoring ground (302, 500) is a full body or a hollow body;
if the anchoring ground (500) is a full body (706), dowel-free screwing (710) the screw (102) through the attachment part (300) into a bore hole in the anchoring ground (500) which is designed as full body;
if the anchoring ground (302) is a hollow body (712), screwing (722) the screw (102) through the attachment part (300) into the dowel (110) in a bore hole in the anchoring ground (500) which is designed as hollow body.

8. Method (700) for spaced tension-free mounting an attachment part (300) to an anchoring ground (302, 500), wherein the method (700) comprises:
providing (702) a screw (102) with a thread part (106), wherein the screw (102) is adapted for self-cuttingly forming a thread when screwing into a bore hole in a concrete wall;
providing (702) a dowel (110);
determining (704) if the anchorage ground (302, 500) is a full body or a hollow body;
if the anchorage ground (500) is a full body (706), dowel-free screwing (710) the screw (102) through the attachment part (300) in a bore hole in the anchorage ground (500) which is designed as full body;
if the anchorage ground (302) is a hollow body (712), screwing (722) the screw (102) through the attachment part (300) into the dowel (110) in a bore hole in the anchorage ground (500) which is designed as hollow body.

9. Method (700) according to claim 8, wherein the dowel (110) is provided with a length based on the depth of the bore hole by cutting-to-length (716) a cutting-to-length dowel (110).

10. Method (700) according to claim 8 or 9, wherein, when determining (704) an anchoring ground (500) made of full stone, an anchoring ground (500) made of full concrete, an anchoring ground (500) made of full metal, or an anchoring ground (500) made of full ceramic is considered as full body.

11. Method (700) according to one of the claims 8 to 10, wherein, when determining (704) an anchorage ground (302) made of hollow block stone, or a porous anchorage ground (302) is considered as hollow body.

12. Method (700) according to one of the claims 8 to 11, wherein a plurality of screws (102) of different length is respectively provided with a thread part (106) and, based on the attachment part (300) and the anchorage ground (302, 500), a respective one of the screws is selected for spaced mounting the attachment part (300) to the anchorage ground (302, 500).

13. Method (700) according to one of the claims 8 to 12, wherein,
if the anchorage ground (302) is a hollow body (712), an outer diameter of the bore hole in the anchorage ground (302) and an outer diameter of a through hole in the attachment part (300) are formed with the same size (714, 720), and
wherein the thread part (106) comprises
a first thread portion (400) adjoining to a screw head (104) of the screw (102), and
a second thread portion (402) adjoining to an opposite end (108) of the screw (102),
wherein the first thread portion (400) has a larger thread diameter than the second thread portion (402).

14. Method (700) according to one of the claims 8 to 13, further comprising at least one of the following features:
if the anchorage ground (302) is a hollow body (712)
a through hole is introduced (720) into the attachment part (300),
the dowel (110) is inserted (718) into the bore hole, and
the screw (102) is screwed through the through hole and is then screwed into the dowel (110) in the bore hole (722);
if the anchorage ground (500) is a full body (706)
a through hole is introduced (708) into the attachment part (300),
the screw (102) is screwed through the through hole and is then self-cuttingly screwed into the bore hole (710);
the attachment part (300) comprises a window frame and/or the anchorage ground (302, 500) comprises a wall.

15. Use of a cutted-to-length dowel (110) and a hardened screw (102) with a thread part (106) for spaced tension-free mounting an attachment part (300) to an anchoring ground (302) which is designed as a hollow body, wherein the screw (102) is adapted for self-cuttingly forming a thread when screwing into a bore hole in a concrete wall.

## Revendications

1. Kit de montage (100) servant à monter sans tension à distance un élément rapporté (300) au niveau d'une base d'ancrage (302, 500), sachant que le kit de montage (100) présente :
une vis (102) comprenant une partie filetée (106) et un entraînement, sachant que la vis (102) est réalisée afin de former par autotaraudage un filetage lors de l'introduction par rotation dans un alésage dans un mur en béton ; et
une cheville (110),
sachant que la vis (102) est mise au point pour être introduite par rotation sans cheville à travers l'élément rapporté (300) dans un alésage dans une base d'ancrage (500) configurée sous la forme d'un corps massif,
sachant que la vis (102) est mise au point pour être introduite par rotation à travers l'élément rapporté (300) dans la cheville (110) dans un alésage dans une base d'ancrage (302) configurée sous la forme d'un corps creux.

2. Kit de montage (100) selon la revendication 1, sachant que la cheville (110) est une pièce découpée en longueur d'une cheville à découper en longueur ou une cheville à découper en longueur, en d'autres termes est découpée en longueur sur la base de la profondeur de l'alésage.

3. Kit de montage (100) selon la revendication 1 ou 2, sachant que la vis (102) est durcie.

4. Kit de montage (100) selon l'une quelconque des revendications 1 à 3, sachant que la partie filetée (106) présente une première section filetée (400) se raccordant à une tête de vis (104) de la vis (102) et une deuxième section filetée (402) se raccordant à une extrémité (108) opposée de la vis (102), sachant que la première section filetée (400) présente un diamètre de filetage plus grand que celui de la deuxième section filetée (402).

5. Kit de montage (100) selon la revendication 4, sachant qu'un pas de filetage de la première section filetée (400) et un pas de filetage de la deuxième section filetée (402) sont identiques.

6. Kit de montage (100) selon la revendication 4 ou 5, présentant une des caractéristiques qui suit :
la vis (102) présente, entre la première section filetée (400) et la deuxième section filetée (402), une section intermédiaire sans filetage (404) ;
la première section filetée (400) se raccorde directement à la deuxième section filetée (402).

7. Kit de montage (100) selon l'une quelconque des revendications 1 à 6, présentant une notice d'utilisation, qui comporte les instructions qui suivent à l'attention d'un utilisateur consistant à :
déterminer (704) si la base d'ancrage (302, 500) est un corps massif ou un corps creux ;
si la base d'ancrage (500) est un corps massif (706), introduire par rotation (710) sans cheville la vis (102) à travers l'élément rapporté (300) dans un alésage dans la base d'ancrage (500) configurée sous la forme d'un corps massif ;
si la base d'ancrage (302) est un corps creux (712), introduire par rotation (722) la vis (102) à travers l'élément rapporté (300) dans la cheville (110) dans un alésage dans la base d'ancrage (500) configurée sous la forme d'un corps creux.

8. Procédé (700) servant à monter sans tension à distance un élément rapporté (300) au niveau d'une base d'ancrage (302, 500), sachant que le procédé (700) présente les étapes qui suivent consistant à :
fournir (702) une vis (102) comprenant une partie filetée (106), sachant que la vis (102) est réalisée afin de former par autotaraudage un filetage lors de l'introduction par rotation dans un alésage dans un mur en béton ;
fournir (702) une cheville (110) ;
déterminer (704) si la base d'ancrage (302, 500) est un corps massif ou un corps creux ;
si la base d'ancrage (500) est un corps massif (706), introduire par rotation (710) sans cheville la vis (102) à travers l'élément rapporté (300) dans un alésage dans la base d'ancrage (500) configurée sous la forme d'un corps massif ;
si la base d'ancrage (302) est un corps creux (712), introduire par rotation (722) la vis (102) à travers l'élément rapporté (300) dans la cheville (110) dans un alésage dans la base d'ancrage (500) configurée sous la forme d'un corps creux.

9. Procédé (700) selon la revendication 8, sachant que la cheville (110) est fournie au moyen d'un découpage en longueur (716) d'une cheville à découper en longueur (110) présentant une longueur établie sur la base de la profondeur de l'alésage.

10. Procédé (700) selon la revendication 8 ou 9, sachant que lors de la détermination (704) une base d'ancrage (500) en pierre massive, une base d'ancrage (500) en béton massif, une base d'ancrage (500) en métal massif ou une base d'ancrage (500) en céramique massive sont considérées comme des corps massifs.

11. Procédé (700) selon l'une quelconque des revendications 8 à 10, sachant que lors de la détermination (704) une base d'ancrage (302) en bloc de pierre creux ou une base d'ancrage (302) poreuse sont considérées comme des corps creux.

12. Procédé (700) selon l'une quelconque des revendications 8 à 11, sachant qu'une pluralité de vis (102) de longueur différente est fournie respectivement avec une partie filetée (106), et une vis respective parmi les vis (102) servant à monter à distance l'élément rapporté (300) au niveau de la base d'ancrage (302, 500) est choisie sur la base de l'élément rapporté (300) et de la base d'ancrage (302, 500).

13. Procédé (700) selon l'une quelconque des revendications 8 à 12, sachant que, si la base d'ancrage (302) est un corps creux (712), un diamètre extérieur de l'alésage dans la base d'ancrage (302) et un diamètre extérieur d'un trou traversant dans l'élément rapporté (300) sont formés de manière à présenter une dimension identique (714, 720), et sachant que la partie filetée (106) présente une première section filetée (400) se raccordant à une tête de vis (104) de la vis (102) et une deuxième partie filetée (402) se raccordant à une extrémité (108) opposée de la vis (102), sachant que la première section filetée (400) présente un diamètre de filetage plus grand que celui de la deuxième partie filetée (402).

14. Procédé (700) selon l'une quelconque des revendications 8 à 13, présentant en outre au moins une des caractéristiques qui suivent :
si la base d'ancrage (302) est un corps creux (712), un trou traversant est pratiqué (720) dans l'élément rapporté (300), la cheville (110) est introduite (718) dans l'alésage et la vis (102) est vissée à travers le trou traversant puis est vissée (722) dans la cheville (110) dans l'alésage ;
si la base d'ancrage (500) est un corps massif (706), un trou traversant est pratiqué (708) dans l'élément rapporté (300), la vis (102) est vissée à travers le trou traversant puis est vissée (710) par autotaraudage dans l'alésage ;
l'élément rapporté (300) présente un châssis de fenêtre et/ou la base d'ancrage (302, 500) présente un mur.

15. Utilisation d'une cheville (110) découpée en longueur et d'une vis (102) durcie comprenant une partie filetée (106) servant à monter sans tension à distance un élément rapporté (300) au niveau d'une base d'ancrage (302) configurée sous la forme d'un corps creux, sachant que la vis (102) est réalisée afin de former par autotaraudage un filetage lors de l'introduction par rotation dans un alésage dans un mur en béton.
